# EUROPÄISCHE PATENTANMELDUNG

(11) **EP 2 053 512 A1**
(43) Veröffentlichungstag der Anmeldung: **29.04.2009**
(21) Anmeldenummer: 08450165.9
(22) Anmeldetag: 23.10.2008
(51) Int. Cl.: G06F 11/14

(54) **Verfahren und Vorrichtung zur selbsttätigen Erstellung von Sicherungskopien**

(30) Priorität: 24.10.2007 AT 17292007
(71) Anmelder: Data Noah GmbH, 8010 Graz (AT)
(72) Erfinder: Rohrer Robert Dipl. Ing., 1140 Wien (AT); Stelzer Peter, 8101 Gratkorn (AT)
(74) Vertreter: Haffner und Keschmann Patentanwälte OG

(57) **Zusammenfassung**

Bei einem Verfahren zur selbsttätigen Erstellung von Sicherungskopien und zur Fern-Archivierung von Dateien aus wenigstens einer elektronischen Datenverarbeitungsanlage, werden Dateien in einer von der Datenverarbeitungsanlage gesonderten Einrichtung, insbesondere Ergänzungs-Datenverarbeitungsvorrichtung, komprimiert, deren Inhalt und ggf. deren Bezeichnung verschlüsselt und danach gesteuert über ein Netzwerk an ein Fern-Archiv übertragen. Die Ergänzungs-Datenverarbeitungsvorrichtung weist einen Dateispeicher (10), eine Schnittstelle für eine Datenverbindung zwischen der Datenverarbeitungsanlage (6) und der Ergänzungs-Datenverarbeitungsvorrichtung (1), Mittel zum Zurverfügungstellen von Serverdiensten, um der Datenverarbeitungsanlage (6) einen Schreib-/Lesezugriff auf den Dateispeicher (10) zu erlauben, eine Datenkomprimiereinrichtung (12), eine Datenverschlüsselungseinrichtung (13) und eine Datenübermittlungseinrichtung (14) auf, wobei die Vorrichtung (1) in einem von der Datenverarbeitungsanlage (6) gesonderten und verschließbaren Gehäuse eingebaut ist.

## Beschreibung

Die vorliegende Erfindung betrifft ein Verfahren zur selbsttätigen Erstellung von Sicherungskopien und zur Fern-Archivierung von Dateien aus wenigstens einer elektronischen Datenverarbeitungsanlage sowie eine Ergänzungs-Datenverarbeitungsvorrichtung zur Durchführung dieses Verfahrens.

Seit den Anfängen der EDV (Elektronischen Datenverarbeitung) wurden verschiedene Einrichtungen und Verfahren geschaffen um Datenverlust durch menschliches oder technisches Versagen zu vermeiden. Die Art der Datenspeicher hat sich rasant weiterentwickelt. Die Medien für Daten reichen von mechanischen Datenträgern (Lochstreifen) und Mikrofilmen über magnetische Speicher wie Magnetbänder, magneto-optische Speicher (magneto-optische Disks, Festplatten (Hard-Disks)) und optische Speicher, wie beschreibbare Compact Disks (CDs) und beschreibbare DVDs (Digital Versatile Disks) bis hin zu elektrisch programmierbaren Halbleiterspeichern (z.B. Silizium-Speicherchips) beispielsweise in USB-Sticks oder Speicherkarten.

Dabei hat sich die Datenmenge und -dichte über die Jahre vervielfacht. Wird ein Speichermedium beschädigt oder werden Daten irrtümlich gelöscht, so kann die Wiederbeschaffung der Daten hohe Kosten oder einen hohen Aufwand verursachen. Auch die Übertragung von einem (möglicherweise veralteten) Speichermedium auf ein anderes oder neues Speichermedium kann sehr aufwendig sein.

Daher hat es sich als vorteilhaft erwiesen, in regelmäßigen oder unregelmäßigen Abständen automatisiert oder manuell eine Archivierungskopie wichtiger Daten auf neuere Speicher-Medien durchzuführen. Dies erlaubt es, irrtümliches Löschen oder Überschreiben wieder rückgängig zu machen, oder bei Ausfall eines Speichermediums die rückgesicherten Daten (Backup) wieder auf ein ausgetauschtes neues Speichermedium zu übertragen. Durch geeignete Wahl der Sicherungszeitpunkte, der Sicherungsfrequenz und der Art der Informationen kann der mögliche Datenverlust auf ein Minimum beschränkt werden.

Bestimmte Programme (z.B. Zeichenprogramme) erlauben es eine bestimmte Anzahl von Bearbeitungsschritten wieder rückgängig zu machen und danach auch wieder durchzuführen. Der letzte Handlungsschritt, angewandt auf Dateien, gewollt oder ungewollt ist bei den meisten Betriebssystemen wieder rückgängig machbar. Mit so genannten Papierkorb-Funktionen, wodurch das endgültige gewollte Löschen erst später erfolgt, wurde eine "Letztablage" geschaffen. Dadurch wurde das Risiko für irrtümliches Löschen etwas verringert.

Datensicherungsprogramme erlauben die Sicherung ganzer Dateiverzeichnisse oder Festplatten-Partitionen an anderen Speicherorten (z.B. anderen Verzeichnissen oder anderen Festplatten oder anderen Festplatten-Partitionen). Diese Programme können die Daten vor der Sicherung komprimieren aber auch mit Kennwörtern sichern oder verschlüsseln. Zur Komprimierung werden Redundanz reduzierende Verfahren angewandt (WinZip, Huffmann, LZW, ART, PPM (Prediction by Partial Matching)). Dabei wird die Informationsdichte erhöht, indem häufige (redundante) Zeichenfolgen durch Referenzierung mit wenigen Zeichen gespeichert werden.

Kennwörter schränken die Leseberechtigung von Dateien ein. Dies ermöglicht eine gewisse Sicherheit gegenüber unbefugtem Zugriff. Durch schnelle Rechenprogramme können jedoch alle möglichen Zeichenkombinationen in einer von der Kennwortlänge abhängigen Zeit ermittelt werden.

Verschlüsselungsalgorithmen wie PGP (Pretty Good Privacy) oder Blowfish 448, Triple-Fish oder dergleichen kodieren die Dateien durch zyklische Verknüpfung mit sich selbst, mit Hilfe von Kodierschlüsseln. Nur mit dem passenden Dekodierschlüssel können die Dateien entschlüsselt werden. Die notwendige Rechenzeit für eine mögliche Entschlüsselung mit Hilfe von schnellsten Rechnern wird durch die Schlüsselgröße (=Menge der Verschlüsselungsbits) bestimmt, und kann Jahrzehnte betragen. Solche Verschlüsselungen gelten als kaum entschlüsselbar.

Alternative Speicher zur Datensicherung bieten auch einen Schutz bei technischem Versagen eines Speichermediums. Wird beispielsweise eine Festplatte defekt, können die Daten dort möglicherweise nicht mehr gelesen werden. Eine Sicherungskopie auf einer zweiten Festplatte, einer Compact-Disk oder DVD ermöglicht das Wiederherstellen auf einer neuen, wiederhergestellten oder irrtümlich oder bewusst gelöschten oder formatierten Festplatte.

Im Katastrophenfall, wie durch Feuer, Erdbeben oder durch Vandalismus können Daten oder Datenträger vor Ort zerstört oder verloren gehen. Zu diesem Zweck werden sensible Daten (von Banken, Versicherungen und Behörden) an besonders sicheren Orten außerhalb der Betriebe, häufig an Rechenzentren übertragen. Dazu dient eine Standleitung oder eine gesicherte Verbindung über das weltweite Datennetz Internet. Bei Stromausfällen schaffen Pufferbatterien oder elektrische Akkumulatoren als zusätzliche Stromlieferanten Abhilfe. Tragbare Rechner wie Notebooks bieten Überwachungsfunktionen, welche eine Absicherung der Daten noch vor dem völligen Versorgungsausfall durchführen.

Die Nutzung der Internet-Verbindung stellt eine besondere Herausforderung an die Sicherheit der Daten gegenüber Einsicht durch Dritte dar.

Das Auslagern der Datenpflege an Rechenzentren kann das Erfordernis des ständigen Übertragens älterer Daten auf neue Speichermedien entbehrlich machen, was insbesondere dann von Vorteil ist, wenn Lesegeräte für alte Speichermedien nicht mehr verfügbar sind. Ebenso müssen weder Bänder, DVDs oder CDs logistisch im oder außer Haus betreut und verwaltet werden, wie die Lagerung in Sicherheitsschränken, Safes oder dergleichen.

Wesentlich für die meisten bekannten Einrichtungen und Verfahren zur Datensicherung ist der Einsatz von Netzwerkrechnern (Servern) für das Verwalten und Speichern oder Sichern (vorzugsweise über Magnetaufzeichnung auf Band) von Daten. Dazu gehört das Übertragen von Daten zwischen angeschlossenen Rechnern (Intranet) oder zu Druckereinrichtungen. Auch das Übertragen von Daten aus dem und in das weltweite Datennetz (Internet) über elektronische Nachrichtenprogramme (E-Mail) ist möglich. Daneben kann der Abruf von Web-Seiten anderer weltweiter Servereinrichtungen, oder das Zurverfügungstellen von eigenen Webseiten für andere Datennetz-Teilnehmer (eingeschränkt oder uneingeschränkt) erfolgen.

EP 0 732 661 B1 beschreibt ein Verfahren und System, mit welchen Informationen über ein Kommunikationsnetzwerk archiviert werden können.

Nachteilig an diesem und anderen bekannten Verfahren ist die Verwendung von offenen Standards für die Datenübertragung, oder die mühsame Installation und Anwendung von unterschiedlichen und möglicherweise instabilen Software-Produkten direkt auf den Server-Rechnern oder Einzelrechnern (zur Übertragung, Komprimierung und Verschlüsselung) verschiedener mehr oder weniger seriöser Hersteller, wodurch letztendlich die Sicherheit vor Zugriff durch Dritte auf die Daten während der Übertragung nicht optimal ist. Komplexe Anmelde- und Ablageroutinen erschweren den Zugang für Konsumenten.

Die vorliegenden Erfindung zielt darauf ab, eine möglichst hardwaregestützte Plug- and Play-Lösung zu schaffen, mit welcher eine sichere Datenarchivierung mit einem Minimum an Benutzereingriffen möglich ist. Insbesondere soll mit der Erfindung eine Vorrichtung und ein Verfahren zur Erstellung von Sicherungskopien und zur Fern-Archivierung von Dateien aus elektronischen Datenverarbeitungsanlagen geschaffen werden, bei welchen die Datensicherung vollständig automatisiert von Statten geht, sodass der Benutzer von jeglicher Verantwortung für den Sicherungsprozess befreit wird. Der Inhalt der gesicherten Daten soll vor dem Zugriff Dritter zuverlässig geschützt sein. Die Einrichtung des Verfahrens bzw. der Vorrichtung soll im Wesentlichen ohne aufwändige Installationsschritte möglich sein, sodass die Anzahl an Fehlerquellen minimiert werden kann.

Zur Lösung dieser Aufgabe zeichnet sich das erfindungsgemäße Verfahren im wesentlichen dadurch aus, dass Dateien in einer von der Datenverarbeitungsanlage gesonderten Einrichtung, insbesondere einer Ergänzungs-Datenverarbeitungsvorrichtung, komprimiert, deren Inhalt und ggf. deren Bezeichnung verschlüsselt und danach gesteuert über ein Netzwerk an ein Fern-Archiv übertragen werden. Dadurch, dass der Vorgang der Datensicherung in einer von der Datenverarbeitungseinrichtung gesonderten Einheit, und insbesondere in einer Ergänzungs-Datenverarbeitungsvorrichtung, durchgeführt bzw. von dieser gesteuert wird, erfolgt kein Eingriff in die eigentliche Datenverarbeitungsanlage, sodass die Notwendigkeit aufwändiger Installationsschritte bei dieser Anlage entfällt. Eine derartige von der Datenverarbeitungseinrichtung gesonderte Einheit kann dem Benutzer als einfache Hardware-Box zur Verfügung gestellt werden, die an bestehende Datenverarbeitungseinrichtungen wie z.B. Rechner oder Netzwerkserver anschließbar ist. Das Anschließen erfolgt hierbei bevorzugt unter Verwendung von Standard-Schnittstellen, wie z.B. LAN, WLAN, Bluetooth, USB oder Fire-Wire.

Dadurch, dass die Daten erfindungsgemäß komprimiert und deren Inhalt und ggf. deren Bezeichnung verschlüsselt werden, wird der für die Datensicherung benötigte Speicherplatz reduziert, wobei die Verschlüsselung es erlaubt, die Vertraulichkeit des Dateiinhalts zu wahren. Da nicht nur der Inhalt einer Datei, sondern auch der Dateiname selbst vertrauliche Daten enthalten kann, wird bevorzugt auch der Dateiname verschlüsselt. Die Notwendigkeit der Verschlüsselung ergibt sich insbesondere auch auf Grund des Umstandes, dass die Dateien über ein Netzwerk an ein Fern-Archiv übertragen werden. Das Fern-Archiv kann hierbei in Räumlichkeiten untergebracht sein, die besonderen Schutzmaßnahmen unterliegen, und insbesondere gegen fremden Zugriff, schädliche Umwelteinflüsse bzw. Naturkatastrophen, gegen Brand und dgl. gesichert sind. Das Fern-Archiv, wie z.B. ein zentraler Backup-Server, sollte vorzugsweise nicht im Nahbereich der zu sichernden Rechner sein, und im Idealfall in einem dafür optimal ausgestatteten und überwachten Rechenzentrum positioniert sein.

Dadurch, dass die Datensicherung in einer gesonderten, externen Hardware-Box vorgenommen wird, kann eine derartige Hardware-Box vollständig vorinstalliert zur Verfügung gestellt werden, sodass benutzerseitig keine weiteren Installationsschritte, ausgenommen die Anbindung an das Netzwerk (Internet), erforderlich sind. Dabei soll die Hardware-Box bevorzugt Server-Funktionen, wie z.B. die zentrale Dateien- oder Programmverwaltung für lokale Netzwerke oder die Anbindung von Netzwerk-Druckern übernehmen können. Auch Dienste zur Datenkonvertierung (Format A in Format B, z.B. alle druckbaren Dateien in das Portable Dokument File (PDF) Format) sollen bevorzugt implementierbar sein. Mit Vorteil soll das Entfernen oder Öffnen der Hardware-Box durch nicht befugte Personen aus Sicherheitsgründen erkannt und ein Zugriff auf die fernarchivierten, verschlüsselten und komprimierten Dateien unterbunden werden.

Höchste Sicherheit soll gemäß einer bevorzugten Verfahrensweise dadurch sichergestellt werden, dass die Daten unter Verwendung eines für die elektronische Datenverarbeitungsanlage unzugänglichen Schlüssels verschlüsselt werden. Eine weitere Erhöhung der Sicherheit gelingt bevorzugt dadurch, dass die Daten unter Verwendung eines aus systemkonstanten, aber spezifischen Bauteilinformationen, wie Prozessor-Seriennummern oder dergleichen, abgeleiteten Schlüssels verschlüsselt werden. Durch die Verwendung mindestens eines speziellen integrierten Schlüssels zur Verschlüsselung und Entschlüsselung der für die Archivierung abgelegten Daten kann ein Zugriff für nicht berechtigte Personen wirksam unterbunden werden.

Die Parameter und Optionen der Datenübertragungen zwischen der Ergänzungs-Datenverarbeitungsvorrichtung und dem Fern-Archiv, wie z.B. Übertragungshäufigkeit (Intervalle), Übertragungszeitpunkte, Tiefe der Änderungsverfolgung, Datenmenge, Übertragungs-Geschwindigkeit und Art der Protokollierung, sollen über geschützte Webseiten-Zugriffe oder durch Administratorenzugriff über die Datenleitung auf die Hardware-Box ermöglicht werden.

Eine besondere Herausforderung besteht darin, nicht nur die einzelnen Dateien in ihrer Letztversion zu sichern, sondern auch jede Änderung der Dateien, d.h. eine Änderung deren Inhalts, festzustellen und die Änderung zu sichern. Durch ein derartiges differentielles Backup ist es möglich, gewünschtenfalls eine bestimmte Änderungsstufe einer Datei wiederherzustellen. Zu diesem Zweck wird im Rahmen des erfindungsgemäßen Verfahrens bevorzugt so vorgegangen, dass für veränderte Dateien eine Differenzdaten-Berechnung zur Erstellung einer Differenz-Datei erfolgt und die Änderungen mit der Originaldatei verknüpft werden und verschlüsselt an das Fern-Archiv übermittelt werden.

Um die Datenmenge zu reduzieren, wird hierbei bevorzugt derart vorgegangen, dass vor dem Verschlüsseln eine Datenkompression der Differenzdatei erfolgt.

Eine Optimierung kann in diesem Zusammenhang bevorzugt dadurch erzielt werden, dass die Dateigrößen der Differenz-Datei, der komprimierten Differenzdatei und der komprimierten geänderten Datei verglichen werden und die kleinste dieser Dateien zur Verschlüsselung und Übertragung an das Fern-Archiv ausgewählt wird, sodass tatsächlich die kleinstmögliche Datenmenge übertragen wird.

Um die einzelnen Dateien am Ursprungsort der jeweils entsprechenden Datei im Fern-Archiv zuzuordnen, ist bevorzugt vorgesehen, dass bereits übertragene Dateien über harte Links markiert und verbunden werden, und das Vorhandensein eines harten Links eine nochmalige Übermittlung verhindert.

Die im Rahmen des erfindungsgemäßen Verfahrens bevorzugt zum Einsatz gelangende Ergänzungs-Datenverarbeitungsvorrichtung zeichnet sich im wesentlichen dadurch aus, dass sie
- einen Dateispeicher,
- eine Schnittstelle für eine Datenverbindung zwischen der Datenverarbeitungsanlage und der Ergänzungs-Datenverarbeitungsvorrichtung,
- Serverdienste, um der Datenverarbeitungsanlage einen Schreib-/Lesezugriff auf den Dateispeicher zu erlauben,
- eine Datenkomprimiereinrichtung zum Komprimieren der auf dem Dateispeicher abgelegten Daten,
- eine Datenverschlüsselungseinrichtung zum Verschlüsseln der auf dem Dateispeicher abgelegten und ggf. komprimierten Daten und
- eine Datenübermittlungseinrichtung zum Übermitteln der ggf. komprimierten und verschlüsselten Daten an das Fern-Archiv aufweist, wobei die Vorrichtung in einem von der Datenverarbeitungsanlage gesonderten und verschließbaren Gehäuse eingebaut ist.

Die erfindungsgemäße Ergänzungs-Datenverarbeitungsvorrichtung weist somit mit Ausnahme des Fern-Archivs alle Komponenten auf, die für die Sicherung notwendig sind.

Bevorzugte Weiterbildungen der Ergänzungs-Datenverarbeitungsvorrichtung ergeben sich aus der obigen Beschreibung des erfindungsgemäßen Verfahrens und werden daher im Folgenden nur kurz zusammengefasst.

Bevorzugt weist die in der Ergänzungs-Datenverarbeitungsvorrichtung vorgesehene Datenverschlüsselungseinrichtung einen Kodierschlüssel aus systemkonstanten, aber spezifischen Bauteilinformationen, wie Prozessor-Seriennummern oder dergleichen auf.

Um eine autonome Betriebsweise der Ergänzungs-Datenverarbeitungsvorrichtung sicherzustellen, weist sie bevorzugt ein autonomes Betriebssystem auf, das vorzugsweise auf einem festprogrammierten Medium, insbesondere einer Speicherkarte (Flash-Karte), gespeichert ist.

Weiters ist bevorzugt eine stabile Mikroprozessoreinheit vorgesehen, die mit Vorteil ohne Lüfter auskommt.

Um die Wiedergewinnung der gesicherten Daten zu erleichtern, ist bevorzugt eine Einrichtung zur Daten-Rückgewinnung mit Entschlüsselung und Wiederherstellung der Ausgangsdaten vorgesehen.

Um ein differentielles Backup zu erlauben weist die Ergänzungs-Datenverarbeitungsvorrichtung bevorzugt eine Differenzdatenberechnungseinrichtung auf.

Um weiters die Einheitlichkeit und Standardisierung der zu speichernden Dateien zu verbessern, weist die Ergänzungs-Datenverarbeitungsvorrichtung bevorzugt eine Datenkonvertierungseinrichtung, insbesondere eine Dateiformatkonvertierungseinrichtung, auf.

In einfacher Weise ist der Dateispeicher als Festplattenspeicher ausgebildet, wobei die Verwendung von Festspeichern ohne bewegliche Teile, wie beispielsweise Flash-Speicher, die Lebensdauer und Ausfallsicherheit erhöhen.

Eine besonders ausfallssichere und gegen Benutzereingriffe sichere Ausbildung ergibt sich bevorzugt, wenn die Datenkomprimiereinrichtung, die Datenverschlüsselungseinrichtung und ggf. die Dateinamensverschlüsselungseinrichtung und die Differenzdatenberechnungseinrichtung von hartverdrahteten Baugruppen (Hardware) gebildet sind.

Die Datenübermittlung von der Ergänzungs-Datenverarbeitungsvorrichtung zu dem Fern-Archiv kann unter Verwendung von Standard-Protokollen erfolgen, sodass die Datenübermittlungseinrichtung von einem Ethernet-, USB- und/oder Fire-Wire (IEEE 1394)-Interface gebildet sein kann.

Um eine regelmäßige Datensicherung zu gewährleisten ist mit Vorteil eine Steuereinrichtung zum Einleiten der Übermittlung der Sicherungskopien an das Fern-Archiv zu vordefinierten Zeiten vorgesehen.

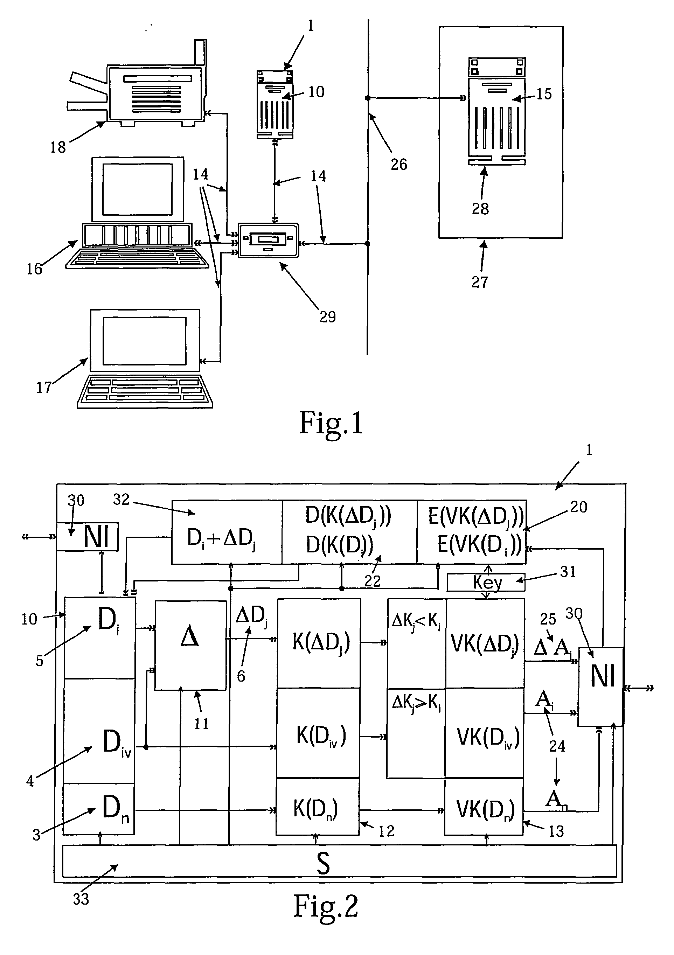

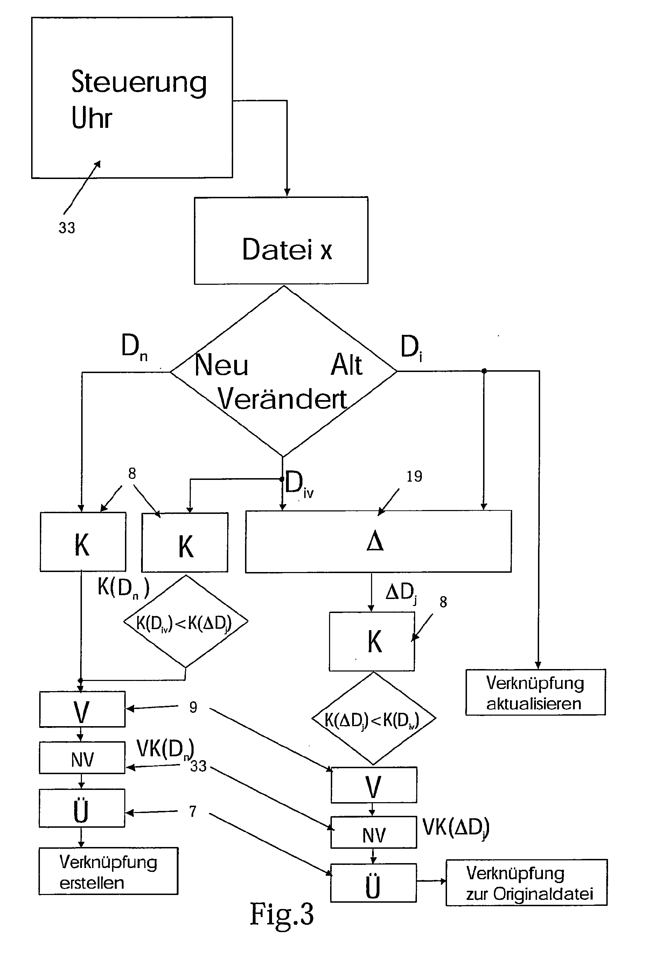

Die Erfindung wird nachfolgend anhand von in der Zeichnung dargestellten Ausführungsbeispielen näher erläutert. In dieser zeigt Fig.1 eine typische Konfiguration einer Ergänzungs-Datenverarbeitungsvorrichtung, Fig.2 die wesentlichen Funktionsblöcke der Vorrichtung gemäß Fig. 1 und Fig.3 ein Ablaufdiagramm für eine Ausführungsform des erfindungsgemäßen Verfahrens.

In Fig. 1 sind zwei Rechner 16,17 an die Ergänzungs-Datenverarbeitungsvorrichtung 1, eine Hardware-Box, angeschlossen. Vorzugsweise kann eine lokale Netwerkverbindung (LAN, Lokal Area Network) oder eine Fire-Wire IEEE 1394 oder USB-(Universal Serial Bus) Verbindung zur Anbindung an die Box genutzt werden. Dadurch erfolgt automatisiert die Zugriffsmöglichkeit auf das lokale Speichermedium 10 (vorzugsweise ein Festplatten-Laufwerk), in der Vorrichtung 1. Dieses erscheint in den Betriebssystemen der angeschlossenen Rechner und kann als Medium für die Abspeicherung der Arbeitsdaten voll genutzt werden. Alle Dateien 3,4, die auf diesem Speicher 10 der Vorrichtung 1 abgelegt werden, gelangen nach der automatisierten, zeitgesteuerten Verarbeitung durch die Vorrichtung komprimiert und verschlüsselt auf das Fern-Archiv 15 einer gesicherten EDV-Anlage 28 an einem gesicherten Speicherort 27 (z.B. in einem Rechenzentrum). Von dort können sie jederzeit durch die Vorrichtung 1 entschlüsselt und dekomprimiert werden und wieder auf dem Speicher 10 verfügbar gemacht werden.

Fig. 2 skizziert den inneren Aufbau der Vorrichtung 1. Über die Verbindungseinrichtung (Netzwerk-Interface NI) 30 eines lokalen Netzwerkes (z.B. Ethernet 100 Mbit) wird der Speicher 10 (z.B. Festplatte) für einen angeschlossenen Rechner, nutzbar.

Alle neu auf dem lokalen Speicher 10 der Ergänzungs-Datenverarbeitungsvorrichtung 1 abgelegten Dateien Dn 3 werden zu vordefinierten oder definierbaren Zeitpunkten über die Ablaufsteuerung 33 mit Hilfe der Datenkomprimiereinrichtung 12 und der Datenverschlüsselungseinrichtung 13 über das Netzwerk-interface an das Fern-Archiv 15 übertragen. Ist die Übertragung fehlerfrei erfolgt, so erfolgt eine Hartverknüpfung mit den ursprünglichen Dateien.

Durch diese Maßnahme werden diese Dateien als gesendet erkannt und markiert. Eine nochmalige Übermittlung wird vermieden. Hier sind die bereits gesendete Dateien mit i indiziert (Di). Bei der nächsten Übertragung wird nur eine neue Hartverknüpfung auf die gesicherte Datei gemacht.

Das Löschen einer Datei bewirkt ein Löschen der Verknüpfung im Fern-Archiv 15, nicht aber der zuvor gesicherten Datei.

Wird die bereits übertragene Datei weiterbearbeitet (verändert) so wird durch die Differenzdatenberechnungseinrichtung 11 eine Differenz-Datei 6 aus der ursprünglichen Datei 5 und der veränderten Datei 4 ermittelt. Infolge wird durch die Datenkomprimiereinrichtung 12 sowohl eine komprimierte Datei aus der veränderten Datei 4 als auch aus der Differenz-Datei 6 gebildet und der Größe nach verglichen. Je nach dem welche Datei kleiner ist, wird entweder die komprimierte Differenzdatei oder die komprimierte veränderte Datei durch die Datenverschlüsselungseinrichtung 13 kodiert und über das Netzwerkinterface 30 übertragen.

Die Datenverschlüsselungseinrichtung 13 verschlüsselt auch den Namen der Datei. Ein harter Link (Hardlink) bleibt auf der verschlüsselten komprimierten Differenzdatei bestehen, wodurch stets sichergestellt ist, dass aus der Originaldatei und der zugehörigen Differenz-Datei wieder zur veränderten Datei rückgebildet werden kann. Gehen abgelegte Dateien verloren, oder werden sie irrtümlich gelöscht, so können diese Dateien, sofern eine Datenübermittlung durchgeführt wurde, wieder aus den Dateien im Fern-Archiv 15 zurück geladen werden. Dazu dient eine Entschlüsselungseinrichtung 20 mit demselben Schlüssel 31 wie er zur Verschlüsselung angewandt ist und der nur der Vorrichtung 1 zur Verfügung steht. Eine Ermittlung oder ein Auslesen des Schlüssels ist nicht oder nur sehr schwer möglich. Die Verwendung von Bauteil-Identifikations-Codes wie z.B. Mikro-Prozessor-Identifikations- und Seriennummern oder dergleichen zur Schlüsselbildung ist eine der Möglichkeiten zur Abbildung eines von niemandem bekannten jedoch eindeutig zuordenbaren Schlüssels. Nach der Entschlüsselung erfolgt durch die Dekomprimiereinrichtung 22 die Erstellung der ursprünglichen oder der Differenz-Dateien. Durch die Einrichtung 32 erfolgt die Wiederherstellung der veränderten Datei 4 aus der Datei vor den Änderungen 5 und der Differenzdatei 6.

Das gegenständliche Verfahren 2 zur Datensicherung ist in Fig. 3 verdeutlicht. Eine beliebige Datei Dn kann durch ein Datenkompressionsverfahren 8 mit Hilfe von Soft- und/oder Hardware in eine Datei höherer Datendichte d.h. durch weniger Informationseinheiten geformt werden.

In einem weiteren Schritt wird diese komprimierte Datei durch die Datenverschlüsselung 9 verändert, wobei durch einen Kodier-Algorithmus (symmetrisch oder unsymmetrisch) die Daten verwürfelt werden und somit weder dekomprimierbar noch entschlüsselbar sind, ausgenommen der passende Gegenschlüssel steht zur Verfügung. Auch der Dateiname wird in einem weiteren Schritt einer Verschlüsselung zugeführt. Danach erfolgt die Übertragung 7. Das Rückgewinnen der Daten erfolgt in umgekehrter Weise aus den verschlüsselten komprimierten Archivdaten. Werden diese über das Netzwerk unter möglicher Verwendung von Benutzername und Kennwort abgerufen, so erfolgt mit Hilfe des Schlüssels 31 und der Entschlüsselung 21 und der anschließenden Dekomprimierung 23 die Wiederherstellung der Archivdatei. Auch der Name wird wieder entschlüsselt.

Mit Hilfe einer Datenverschlüsselungseinrichtung wird jede komprimierte Datei in ein neues unlesbares Format verschlüsselt, wobei die Verschlüsselungsfunktion ein bekannter (z.B. Blowfish 448, Triple-Fish) oder unbekannter Algorithmus mit Hilfe eines im Gerät verborgenen, schwer auslesbaren und weltweit einmaligen Kodierungsschlüssels erfolgt. Neben dem Inhalt der Dateien kann auch deren Name verschlüsselt werden, um größte Diskretion zu erzielen.

Die verschlüsselten komprimierten Dateien werden mit Hilfe einer Datenfernüberfragungseinrichtung (beispielsweise Ethernet-Interface 100 Mbit) auf den Sicherungsserver (vorzugsweise im Rechenzentrum) zu definierbaren Zeitpunkten übertragen. Dort erfolgt die logistische Ablage der Datei unter Angabe von Datum, Uhrzeit und der Quellenzuordnung.

Idealerweise sind die maximal speicherbare Datenmenge, die Versionstiefe einer Datei, die Sicherungsfrequenz und andere Werte einstellbar. Dies kann von einem Anbieter von Speicherplatz auf einem Rechenzentrum erfolgen oder durch den Benutzer in seinem berechtigtem Umfang. Der zugriff auf diese Management-Funktionen erfolgt dabei idealerweise ebenfalls über das Netzwerk (z.B. Internet). Änderungen der Grundeinstellungen erfordern Zugriffsrechte (über Benutzernamen und Kennwörter). Jede Neueinstellung kann dazu beispielsweise eine elektronische Nachricht mit dem Inhalt der neuen Management-Einstellung auslösen. Um Hackern (Datei-Einbrechern) möglichst keinen Spielraum für schädigende Handlungen zu bieten, sind die Variationsmöglichkeiten für das Sichern vorzugsweise sehr gering, auch eine Fixeinstellung ist möglich. Für das öffentliche Netzwerk sind die verschlüsselten und komprimierten Daten nur mit Benutzername und Kennwort zugreifbar. Die Übertragung erfolgt ebenfalls in einem gesicherten verschlüsselten Kanal-Übertragungsprotokoll, beispielsweise SSH-Tunnel.

Zur Vermeidung wiederholter Übertragungen bereits gesicherter Dateien dienen Hartverknüpfungen (Hardlinks). Das sind Zeiger, die auf eine gesicherte Datei auf dem Sicherungsserver (z.B. im Rechenzentrum) zeigen und eine Verknüpfung mit der Ursprungsdatei darstellen. Wird eine solchermaßen verknüpfte Datei im Zwischenablager-Speicher des Erfindungsgegenstandes verändert oder gelöscht (absichtlich oder unbeabsichtigt), so ermittelt das System vor oder nach einem Sicherungsvorgang diese Änderungen. Dabei wird die geänderte Datei komprimiert und die Änderungen der ursprünglichen Datei komprimiert (Differenzdatenkompression). Je nachdem welche Variante weniger Speicherplatz benötigt, wird entweder die geänderte komprimierte Datei oder aber die komprimierte Datei der Änderungen (Differenz-Datei) gespeichert und zur Sollzeit verschlüsselt übertragen. Im zweiten Fall eine Hartverknüpfung der ursprünglichen Datei an die Differenz-Datei, und im ersten Fall wird während der Sicherung eine neue Hartverknüpfung auf die neue gesicherte Datei erzeugt. Wird keine Änderung gemacht, erfolgt nur eine Übertragung der Hartverknüpfung mit der Information des Sicherungszeitpunktes. Somit wird bei einer allfälligen Rückholung und Wiederherstellung der Daten auf die verknüpfte (verlinkte) Datei zugegriffen. Wird eine Datei nach einem Sicherungsvorgang gelöscht, so wird bei einem neuerlichen Sicherungsvorgang auch keine neue Hartverknüpfungsinformation mehr übermittelt. Die gesicherte Datei der zuvor erfolgten Sicherung bleibt jedoch erhalten.

### Bezugszeichenliste

- 1: Ergänzungs-Datenverarbeitungsvorrichtung
- 2: Verfahren zur Datensicherung
- 3: neue Datei (nicht archiviert), Dn
- 4: veränderte Datei in Bezug auf eine Archivdatei
- 5: archivierte Datei Di
- 6: Differenzdatei (ΔD)
- 7: Datenübertragung
- 8: Datenkompression
- 9: Datenverschlüsselung
- 10: lokaler Speicher in der Vorrichtung 1
- 11: Differenzdatenberechnungseinrichtung
- 12: Datenkomprimiereinrichtung
- 13: Datenverschlüsselungseinrichtung
- 14: Datenübermittlungseinrichtung
- 15: Fern-Archiv (Speicher)
- 16: EDV-Anlage (stationär), z.B. PC, Workstation
- 17: EDV-Anlage (mobil), z.B. Notebook
- 18: Drucker
- 19: Differenzdatenberechnung
- 20: Entschlüsselungseinrichtung
- 21: Entschlüsselung
- 22: Dekomprimiereinrichtung
- 23: Dekomprimierung
- 24: verschlüsselte komprimierte Archivdatei (Ai, An)
- 25: verschlüsselte komprimierte Archiv-Differenzdatei (ΔAj)
- 26: Netzwerk
- 27: gesicherter Ort (z.B. Rechenzentrum)
- 28: gesicherte EDV-Anlage
- 29: Netzwerk-Server (Netzwerk-Knoten mit XDSL, ADSL, ISDN oder Analog-Modem-Anbindung)
- 30: Netzwerkinterface (LAN, USB, Fire-Wire IEEE 1394)
- 31: Verborgener Schlüssel (für Kodier und Dekodier-Einrichtung)
- 32: Einrichtung zur Erstellung der ursprünglichen Datei aus der Basisdatei und seiner Variation(en)
- 33: Ablaufsteuerung
- 34: Dateinamen-Verschlüsselung

## Patentansprüche

1. Verfahren zur selbsttätigen Erstellung von Sicherungskopien und zur Fern-Archivierung von Dateien aus wenigstens einer elektronischen Datenverarbeitungsanlage, **dadurch gekennzeichnet, dass** Dateien in einer von der Datenverarbeitungsanlage gesonderten Einrichtung, insbesondere Ergänzungs-Datenverarbeitungsvorrichtung, komprimiert, deren Inhalt und ggf. deren Bezeichnung verschlüsselt und danach gesteuert über ein Netzwerk an ein Fern-Archiv übertragen werden.

2. Verfahren nach Anspruch 1, **dadurch gekennzeichnet, dass** die Daten unter Verwendung eines für die elektronische Datenverarbeitungsanlage unzugänglichen Schlüssels verschlüsselt werden.

3. Verfahren nach Anspruch 1 oder 2, **dadurch gekennzeichnet, dass** die Daten unter Verwendung eines aus systemkonstanten, aber spezifischen Bauteilinformationen, wie Prozessor-Seriennummern, abgeleiteten Schlüssels verschlüsselt werden.

4. Verfahren nach Anspruch 1, 2 oder 3, **dadurch gekennzeichnet, dass** für veränderte Dateien eine Differenzdaten-Berechnung zur Erstellung einer Differenz-Datei erfolgt und die Änderungen mit der Originaldatei verknüpft werden und verschlüsselt an das Fern-Archiv übermittelt werden.

5. Verfahren nach Anspruch 4, **dadurch gekennzeichnet, dass** vor dem Verschlüsseln eine Datenkompression der Differenzdatei erfolgt.

6. Verfahren nach einem der Ansprüche 1 bis 5, **dadurch gekennzeichnet, dass** die Dateigrößen der Differenz-Datei, der komprimierten Differenzdatei und der komprimierten geänderten Datei verglichen werden und die kleinste dieser Dateien zur Verschlüsselung und Übertragung an das Fern-Archiv ausgewählt wird.

7. Verfahren nach einem der Ansprüche 1 bis 6, **dadurch gekennzeichnet, dass** bereits übertragene Dateien über harte Links markiert und verbunden werden, und das Vorhandensein eines harten Links eine nochmalige Übermittlung verhindert.

8. Ergänzungs-Datenverarbeitungsvorrichtung zur Erstellung von Sicherungskopien elektronischer Dateien aus wenigstens einer elektronischen Datenverarbeitungsanlage und zur Übermittlung derselben an wenigstens ein Fern-Archiv, insbesondere zur Durchführung des Verfahrens nach einem der Ansprüche 1 bis 7, **dadurch gekennzeichnet, dass** die Vorrichtung
- einen Dateispeicher (10),
- eine Schnittstelle für eine Datenverbindung zwischen der Datenverarbeitungsanlage (6) und der Ergänzungs-Datenverarbeitungsvorrichtung (1),
- Serverdienste, um der Datenverarbeitungsanlage (6) einen Schreib-/Lesezugriff auf den Dateispeicher (10) zu erlauben,
- eine Datenkomprimiereinrichtung (12) zum Komprimieren der auf dem Dateispeicher abgelegten Daten,
- eine Datenverschlüsselungseinrichtung (13) zum Verschlüsseln der auf dem Dateispeicher abgelegten und ggf. komprimierten Daten und
- eine Datenübermittlungseinrichtung (14) zum Übermitteln der ggf. komprimierten und verschlüsselten Daten an das Fern-Archiv aufweist, wobei die Vorrichtung (1) in einem von der Datenverarbeitungsanlage (6) gesonderten und verschließbaren Gehäuse eingebaut ist.

9. Ergänzungs-Datenverarbeitungsvorrichtung nach Anspruch 8, **dadurch gekennzeichnet, dass** die Datenverschlüsselungseinrichtung (13) einen Kodierschlüssel aus systemkonstanten, aber spezifischen Bauteilinformationen, wie Prozessor-Seriennummern aufweist.

10. Ergänzungs-Datenverarbeitungsvorrichtung nach Anspruch 8 oder 9, **dadurch gekennzeichnet, dass** sie ein autonomes Betriebssystem aufweist, das vorzugsweise auf einem festprogrammierten Medium, insbesondere einer Speicherkarte (Flash-Karte), gespeichert ist.

11. Ergänzungs-Datenverarbeitungsvorrichtung nach Anspruch 8, 9 oder 10, **dadurch gekennzeichnet, dass** sie eine Einrichtung (14) zur Daten-Rückgewinnung mit Entschlüsselung und Wiederherstellung der Ausgangsdaten aufweist.

12. Ergänzungs-Datenverarbeitungsvorrichtung nach einem der Ansprüche 8 bis 11, **dadurch gekennzeichnet, dass** sie eine Dateinamensverschlüsselungseinrichtung (34) aufweist.

13. Ergänzungs-Datenverarbeitungsvorrichtung nach einem der Ansprüche 8 bis 12, **dadurch gekennzeichnet, dass** sie eine Differenzdatenberechnungseinrichtung (11) aufweist.

14. Ergänzungs-Datenverarbeitungsvorrichtung nach einem der Ansprüche 8 bis 13, **dadurch gekennzeichnet, dass** sie eine Datenkonvertierungseinrichtung, insbesondere eine Dateiformatkonvertierungseinrichtung, aufweist.

15. Ergänzungs-Datenverarbeitungsvorrichtung nach einem der Ansprüche 8 bis 14, **dadurch gekennzeichnet, dass** der Dateispeicher (10) als Festplattenspeicher ausgebildet ist.

16. Ergänzungs-Datenverarbeitungsvorrichtung nach einem der Ansprüche 8 bis 15, **dadurch gekennzeichnet, dass** die Datenkomprimiereinrichtung (12), die Datenverschlüsselungseinrichtung (13) und ggf. die Dateinamensverschlüsselungseinrichtung (34)und die Differenzdatenberechnungseinrichtung (11) von hartverdrahteten Baugruppen (Hardware) gebildet sind.

17. Ergänzungs-Datenverarbeitungsvorrichtung nach einem der Ansprüche 8 bis 16, **dadurch gekennzeichnet, dass** die Datenübermittlungsseinrichtung (14) von einem Ethernet-, USB- und/oder Fire-Wire (IEEE 1394)-Interface gebildet ist.

18. Ergänzungs-Datenverarbeitungsvorrichtung nach einem der Ansprüche 8 bis 17, **dadurch gekennzeichnet, dass** sie eine Steuereinrichtung zum Einleiten der Übermittlung der Sicherungskopien an das Fern-Archiv zu vordefinierten Zeiten aufweist.
